(19) Europäisches Patentamt
European Patent Office
Office européen des brevets

(11) Numéro de publication : **0 301 976 B1**

(12) # FASCICULE DE BREVET EUROPEEN

(45) Date de publication du fascicule du brevet : **24.04.91 Bulletin 91/17**

(51) Int. Cl.$^5$ : **C08G 63/60,** C08G 69/44

(21) Numéro de dépôt : **88420234.2**

(22) Date de dépôt : **04.07.88**

(54) **Copolyesters et copolyesteramides aromatiques thermotropes.**

(30) Priorité : **10.07.87 FR 8710177**

(43) Date de publication de la demande : **01.02.89 Bulletin 89/05**

(45) Mention de la délivrance du brevet : **24.04.91 Bulletin 91/17**

(84) Etats contractants désignés : **AT BE CH DE ES FR GB IT LI LU NL SE**

(56) Documents cités :
**EP-A- 0 066 359**
**EP-A- 0 088 742**
**EP-A- 0 102 160**
**FR-A- 2 576 027**
**FR-A-22 702 82**
**US-A-41 537 79**

(56) Documents cités :
**PATENT ABSTRACTS OF JAPAN, vol. 8, no. 67 (C-216)[1504], 29th March 1984; & JP-A-58 219 230 (KOGYO GIJUTSUIN) 20-12-1983**
**British Polymer Journal, December 1980, pages 147-153**

(73) Titulaire : **RHONE-POULENC CHIMIE**
**25, quai Paul Doumer**
**F-92408 Courbevoie Cédex (FR)**

(72) Inventeur : **Quentin, Jean-Pierre**
**35D, rue Joliot-Curie**
**F-69005 Lyon (FR)**

(74) Mandataire : **Trolliet, Maurice et al**
**RHONE-POULENC INTERSERVICES Service Brevets Chimie Centre de Recherches des Carrières B.P. 62**
**F-69192 Saint-Fons Cédex (FR)**

EP 0 301 976 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

COPOLYESTERS ET COPOLYESTERAMIDES AROMATIQUES THERMOTROPES

La présente invention concerne des copolyesters et des copolyesteramides aromatiques thermotropes conformables dérivant d'une part d'une hydroquinone (ou un dérivé), d'autre part d'un mélange de diacides carboxyliques aromatiques (ou leurs dérivés) et enfin d'au moins un hydroxyacide carboxylique aromatique (ou un dérivé) ou d'au moins un aminoacide carboxylique aromatique (ou un dérivé).

On connait déjà des polyesters thermotropes dérivant d'une part d'un ou plusieurs diphénols et d'autre part d'un ou plusieurs diacides carboxyliques aromatiques et/ou cycloaliphatiques. Des polyesters de ce genre sont divulgués par exemple dans le brevet français 2.270.282 et parmi les polyesters qui y sont décrits, ceux obtenus notamment à partir d'une hydroquinone substituée (ou un dérivé), d'acide téréphtalique (ou un dérivé) et de dicarboxy-4,4 diphényléther (ou un dérivé) sont des espèces présentant un intérêt certain.

Un objectif visé par la présente invention est de proposer des polyesters thermotropes qui peuvent être préparés de manière plus économique que ne le sont les copolyesters particuliers précités, du fait :

- d'une part du remplacement de l'hydroquinone substituée (ou un dérivé) par un diphénol moins onéreux tel que l'hydroquinone non substituée (ou un dérivé), et
- d'autre part de l'emploi du dicarboxy-4,4′ diphényléther (ou un dérivé), qui est également un réactif onéreux, en plus faible concentration dans le mélange des réactifs de départ et de l'ajout d'un réactif supplémentaire approprié peu coûteux et facilement disponible industriellement.

Un autre objectif visé par la présente invention est de chercher à surmonter un inconvénient des copolyesters particuliers précités résidant dans l'obtention de valeurs de propriétés thermo-mécaniques insuffisantes qui demandent à être améliorées.

Il a maintenant été trouvé que l'on pouvait arriver à la satisfaction de ces objectifs grâce à la mise en oeuvre de la présente invention ci-après définie.

Plus précisément, la présente invention concerne des copolyesters et des copolyesteramides aromatiques thermotropes conformables, caractérisés par les points suivants :

- ils comprennent des unités de récurrence de formules (I), (II), (III) et (IV) :

(I) désignant la structure : 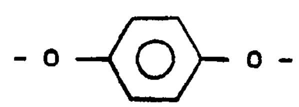 ;

(II) désignant la structure : 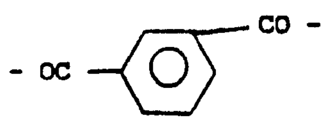 ;

(III) désignant la structure : 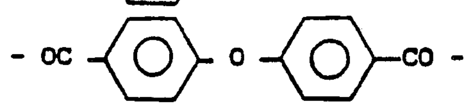 ;

(IV) désignant la structure : 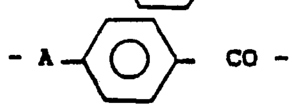 dans laquelle le symbole A représente un atome d'oxygène ou le groupement NH ;

- le rapport molaire des unités (I) par rapport à la somme des unités (II) + (III) se situe dans l'intervalle allant de 0,95 à 1,05 ;
- la quantité des unités (II) dans le mélange (II) + (III) se situe dans l'intervalle allant de 20 à 90% en mole et celle des unités (III), par rapport à la même référence, se situe dans l'intervalle allant de 80 à 10% en mole ;
- la quantité des unités (IV), exprimée par rapport à la quantité des unités (I), se situe dans l'intervalle allant de 25 à 300% en mole ;
- et ces copolyesters et copolyesteramides possèdent une température d'écoulement se situant dans l'intervalle allant de 200 à 350°C.

Les unités de formule (I) sont issues de l'hydroquinone non substitué ou de son diester.

Les unités de formule (II) proviennent d'acide isophtalique ou d'un dérivé comme par exemple un dihalogénure ou un diester.

Les unités de formule (III) proviennent du dicarboxy-4,4′ diphényléther ou d'un dérivé comme par exemple

un dihalogénure ou un diester.

Les unités de formule (IV) sont issues d'acide parahydroxybenzoïque (A représente alors un atome d'oxygène) ou d'acide paraaminobenzoïque (A représente alors le groupement NH) ou d'un dérivé comme par exemple le composé obtenu par acylation de la fonction phénol (cas de l'acide parahydroxybenzoïque) ou de la fonction amine (cas de l'acide paraaminobenzoïque) ou le composé obtenu par estérification de la fonction acide ou un halogénure de la fonction acide.

Selon une modalité préférentielle, les copolyesters et copolyesteramides de la présente invention présentent une structure telle que définie ci-avant dans laquelle :

- la quantité des unités (II) dans le mélange (II) + (III) se situe dans l'intervalle allant de 30 à 85% en mole et celles des unités (III), par rapport à la même référence, va de 70 à 15% en mole ;
- et la quantité des unités (IV), exprimée par rapport à la quantité des unités (I), se situe dans l'intervalle allant de 30 à 200% en mole.

A propos de la viscosité inhérente, on précisera qu'elle est mesurée à 25°C sur une solution renfermant 0,5 g de copolyester ou copolyesteramide pour 100 $cm^3$ d'un mélange solvant parachlorophénol/dichloro-1,2 éthane (50/50 en volume). Les copolyesters et copolyesteramides conformes à la présente invention possèdent une viscosité inhérente au moins égale à 0,3 $dlg^{-1}$ ; de préférence, ils possèdent une viscosité inhérente au moins égale à 0,5 $dlg^{-1}$ qui peut se situer plus précisément dans l'intervalle allant de 0,5 à 4,0 $dlg^{-1}$.

A propos de la température d'écoulement, elle se situe plus préférentiellement dans l'intervalle allant de 260 à 330°C. On entend par "température d'écoulement", la température à laquelle les bords d'un échantillon sous forme de copeau de polymère ou de fibre coupée commencent à s'arrondir. Cette température est déterminée par observation visuelle de l'échantillon sur une lamelle couvre-objet pour une vitesse de montée en température appropriée, généralement de l'ordre de 10 à 20°C minute, observation faite à l'aide d'un microscope équipé d'une platine chauffante connu dans le commerce sous la marque THERMOPAN.

Les copolyesters et copolyesteramides conformes à la présente invention englobent aussi les polymères qui peuvent contenir en outre dans leur structure des unités aromatiques génératrices de fonctions esters et amides (unités dioxy et/ou unités dicarbonyle et/ou unités mixtes oxy/carbonyle ou amino secondaire/carbonyle) ayant une structure autre que celle des unités (I), (II), (III) et (IV), la quantité totale de ces unités supplémentaires étant au plus égale à 10% en mole par rapport à la quantité des unités (I). Un liste non limitative de ces unités supplémentaires est la suivante :

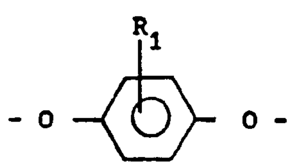

(I') où $R_1$

représente un radical méthyle ou un atome de chlore, les unités (I') pouvant être identiques ou différentes entre elles,

et/ou 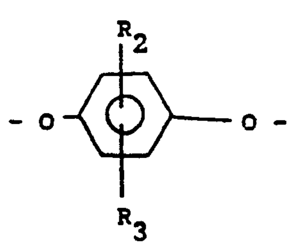

(I") où $R_2$

et $R_3$, qui peuvent être identiques ou différents, ont chacun la définition donnée ci-avant pour $R_1$, les unités (I") pouvant être identiques ou différentes entre elles,

et/ou - 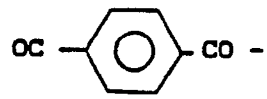 (II')

et/ou - 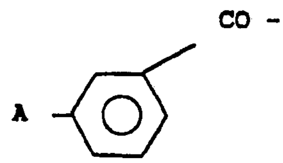 (IV') où le symbole A a la signification donnée ci-avant à propos des unités (IV).

Les unités de formule (I') sont issues d'une hydroquinone monosubstituée par un radical méthyle ou un atome de chlore, ou de son diester ou d'un mélange d'hydroquinones monosubstituées ou de leurs diesters.

Les unités de formule (I") sont issues d'une hydroquinone disubstituée ou de son diester ou d'un mélange d'hydroquinones disubstituées ou de leurs diesters.

Les unités de formule (II') sont issues de l'acide téréphtalique ou d'un dérivé comme par exemple un dihalogénure ou un diester.

Les unités de formule (IV') sont issues d'acide métahydroxybenzoïque ou d'un dérivé ou d'acide métaaminobenzoïque ou d'un dérivé.

Il doit être bien entendu que les quantités totales de toutes les unités dioxy et de toutes les unités dicarbonyle alors présentes dans le copolyester ou le copolyesteramide devront être telles que le rapport molaire de la totalité des unités dioxy par rapport à la somme totalité des unités dioxy + totalité des unités dicarbonyle se situe dans l'intervalle allant de 0,95 à 1,05.

Les copolyesters et les copolyesteramides selon la présente invention présentent la caractéristique importante d'être thermotropes, c'est à dire qu'ils sont capables de former des masses fondues anisotropes qui sont faciles à conformer par filage, filmage ou moulage : la thermotropie est facile à mettre en évidence lorsqu'on observe le polymère à l'état fondu dans un système optique équipé de deux polariseurs croisés (90°C) : il se produit pour les échantillons anisotropes une biréfringence et une transmission de la lumière polarisée à travers les polariseurs croisés. La mise en évidence de l'anisotropie des polymères selon la présente invention a été effectuée par la méthode thermo-optique TOT décrite dans le brevet français 2 270 282.

De ce fait, les masses fondues à l'état anisotrope possèdent une orientation propre et un degré relativement élevé d'organisation qui se retrouvent sur les articles conformés tels que les fils, films et objets moulés leur conférant (déjà à l'état brut) des propriétés améliorées telles que module, ténacité, qu'on n'observe pas habituellement sur les produits bruts isotropes.

Il convient de noter que ces masses fondues anisotropes possèdent une plage d'anisotropie étalée sur au moins 30°C. On entend par "plage d'anisotropie", l'intervalle de températures qui part de la température à laquelle apparaît la biréfringence et la transmission de la lumière à travers les deux polariseurs croisés et qui se situe au-dessus de ladite température, intervalle ayant une borne supérieure variable et dans lequel la masse fondue est anisotrope sans aucun risque de décomposition du polymère thermotrope.

Les copolyesters et copolyesteramides selon la présente invention peuvent être mis en forme au moyen de tout procédé connu tel que moulage, filage, filmage et en opérant bien entendu dans la plage d'anisotropie pour donner des articles ayant un bon niveau de propriétés. La présence notamment, dans la structure des polymères conformes à la présente invention, des unités mixtes oxy/carbonyle ou amino secondaire/carbonyle (IV) permet de faire baisser le prix moyen des matières premières et par conséquent de minimiser le coût de production des articles en formes issus de ces polymères. Par ailleurs, dans le cas par exemple d'articles moulés, on peut noter (par rapport à ce qui se passe en absence de pareilles unités mixtes) une amélioration sensible des valeurs de certaines propriétés mécaniques, notamment les valeurs des modules de flexion et de torsion et on peut noter en outre une meilleure conservation des propriétés mécaniques en fonction de la température.

Il est possible d'augmenter encore les propriétés mécaniques, notamment celles des articles minces, par traitement thermique à température élevée, inférieure à la température de fusion du polymère.

Suivant l'application qui en sera faite, les copolyesters et copolyesteramides selon l'invention peuvent recevoir des additifs tels que notamment des colorants, des agents de stabilisation contre l'action de la lumière, de l'oxygène et de la chaleur, des charges de remplissage ou de renforcement, des agents ignifugeants.

Les copolyesters et copolyesteramides conformes à la présente invention peuvent être préparés par différents procédés connus de polymérisation.

Par exemple, ils peuvent être préparés en faisant réagir :

1. – l'hydroquinone, en mélange éventuellement avec un autre (ou d'autres) diphénol(s) comme par exemple une ou plusieurs hydroquinone(s) monosubstituée(s) et/ou une ou plusieurs hydroquinone(s) disubstituée(s), avec

2. – un dérivé de l'acide isophtalique pris seul ou en mélange éventuellement avec un dérivé d'un autre diacide carboxylique aromatique comme par exemple l'acide téréphtalique, et avec

3. – un dérivé du dicarboxy-4,4′ diphényléther, et avec

4. – un dérivé de l'acide parahydroxybenzoïque au niveau de la fonction acide ou un dérivé de l'acide paraaminobenzoïque au niveau de la fonction acide, pris seul ou en mélange éventuellement avec un dérivé du même type d'un autre hydroxyacide aromatique comme par exemple l'acide métahydroxybenzoïque ou d'un autre aminoacide aromatique comme par exemple l'acide métaaminobenzoïque,

ledit dérivé d'acide étant soit un halogénure comme par exemple un chlorure, soit un ester d'aryle comme par exemple un ester de phényle, de tolyle ou de naphtyle (ledit dérivé étant bien entendu un dihalogénure ou un diester dans le cas d'un diacide carboxylique). La réaction s'effectue en générale en présence d'un catalyseur tel que ceux cités dans le brevet canadien 735 543.

Dans ce procédé, les réactifs sont utilisés dans des proportions telles que :

– le rapport molaire diphénol(s)/dérivés de diacides se situe dans l'intervalle allant de 0,95 à 1,05,

– la quantité de dérivé d'acide isophtalique dans le mélange dérivé d'acide isophtalique + dérivé du dicarboxy-4,4′ diphényléther se situe dans l'intervalle allant de 20 à 90% en mole, et de préférence allant de 30 à 85% en mole,

– la quantité de dérivé d'acide parahydroxybenzoïque ou d'acide paraaminobenzoïque se situe dans l'intervalle allant de 25 à 300% en mole par rapport à la quantité d'hydroquinone non substituée, et de préférence allant de 30 à 200% en mole,

– la quantité totale des réactifs engagés autres que l'hydroquinone non substituée, le dérivé d'acide isophtalique, le dérivé de dicarboxy-4,4′ diphényléther et le dérivé d'acide parahydroxybenzoïque ou paraaminobenzoïque est au plus égale à 10% en mole par rapport à la quantité d'hydroquinone non substituée.

Les polymères obtenus d'après ce premier procédé présentent généralement des groupes terminaux d'un côté du type H phénolique et/ou H de $NH_2$ et, de l'autre côté, du type halogéno ou aryloxy.

Il est également possible de préparer les copolyesters et les copolyesteramides selon l'invention par estérification et amidification directes entre le (ou les) diphénol(s) envisagés, les diacides carboxyliques aromatiques et les (ou les) hydroxyacide(s) aromatique(s) ou le (ou les) aminoacide(s) aromatique(s). Les copolyesteramides ainsi obtenus présentent généralement des groupes terminaux du type H phénolique et/ou H de $NH_2$ et OH acide.

Mais de préférence, on fait appel à un troisième procédé mettant en oeuvre une réaction d'acidolyse. Conformément à ce procédé préféré on fait réagir :

1. – un diester d'hydroquinone non substituée en mélange éventuellement avec un (ou des) diester(s) d'un autre (ou d'autres) diphénol(s) comme par exemple un ou plusieurs hydroquinone(s) monosubstituée(s) et/ou une ou plusieurs hydroquinone(s) disubstituée(s) avec

2. – de l'acide isophtalique pris seul ou en mélange éventuellement avec un autre diacide carboxylique aromatique comme par exemple l'acide téréphtalique, et avec

3. – le dicarboxy-4,4′ diphényléther, et avec

4. – un dérivé acylé de l'acide parahydroxybenzoïque au niveau de la fonction phénol ou un dérivé acylé de l'acide paraaminobenzoïque au niveau de la fonction amine, pris seul ou en mélange éventuellement avec un dérivé acylé du même type d'un autre hydroxyacide aromatique comme par exemple l'acide métahydroxybenzoïque ou d'un autre aminoacide aromatique comme par exemple l'acide métaaminobenzoïque,

ledit diester de diphénol étant formé à partir d'un acide alcanoïque ayant de 2 à 6 atomes de carbone, comme par exemple un ester acétique et ledit dérivé acylé d'hydroxyacide ou d'aminoacide au niveau de la fonction hydroxy ou amine étant formé à partir d'un anhydride ou d'un halogénure comme par exemple un chlorure dérivé d'un acide alcanoïque ayant de 2 à 6 atomes de carbone, comme par exemple un dérivé acétylé.

La réaction s'effectue en générale là aussi en présence d'un catalyseur tel que notamment l'acétate de sodium, de magnésium, de manganèse et de zinc, le titanate de butyle, le trioxyde d'antimoine. Elle débute en général à une température comprise entre 260°C et 310°C, puis l'acide formé distille. Après avoir recueilli environ 80% de la théorie d'acide à distiller, on élève progressivement la température jusqu'à une valeur supérieure à la température choisie pour débuter la réaction et se situant dans l'intervalle allant de 280°C à 330°C, tout en diminuant progressivement la pression. Lorsque la distillation de l'acide est terminée, la polycondensation est continuée sous un vide important pendant une durée pouvant aller jusqu'à 30 minutes ou davantage.

Dans ce procédé par acidolyse, les réactifs sont utilisés dans des proportions telles que :
– le rapport molaire diester(s) de diphénol(s)/diacides totaux se situe dans l'intervalle allant de 0,95 à 1,05,
– la quantité d'acide isophtalique dans le mélange acide isophtalique + dicarboxy-4,4′ diphényléther se situe dans l'intervalle allant de 20 à 90% en mole, et de préférence allant de 30 à 85% en mole,
– la quantité de dérivé acylé d'acide parahydroxybenzoïque ou d'acide paraaminobenzoïque au niveau de la fonction phénol ou amine se situe dans l'intervalle allant de 25 à 300% en mole par rapport à la quantité de diester d'hydroquinone non substituée, et de préférence allant de 30 à 200% en mole,
– la quantité totale des réactifs engagés autres que le diester d'hydroquinone non substituée, l'acide isophtalique, le dicarboxy-4,4′ diphényléther et le dérivé acylé d'acide parahydroxybenzoïque ou d'acide paraaminobenzoïque est au plus égale à 10% en mole par rapport à la quantité de diester d'hydroquinone non substituée.

Les polymères obtenus d'après ce troisième procédé présentent généralement des groupes terminaux d'un côté du type alkoxy et/ou acylamino et, de l'autre côté, du type OH acide.

Les exemples non limitatifs qui suivent montrent comment la présente invention peut être mise en oeuvre pratiquement.

Dans ces exemples, un certain nombre de contrôles des copolyesteramides obtenus sont effectués. On indique ci-après les modes opératoires et/ou les normes selon lesquels ces contrôles sont effectués :

– module en torsion :

Il est déterminé à différentes températures au pendule automatique de torsion sous une fréquence de l'ordre de 1 Hertz selon la norme ISO R 537 méthode B, les éprouvettes étant conditionnées à EH 50 selon la norme NF T 51 014. Les résultats sont exprimés en MPa.

– Module en flexion :

Cette détermination est faite à 23°C selon les indications de la norme NF T 51 001 sur des éprouvettes de type barreau de 80 × 8 × 4 mm, conditionnées à EH 50. Les résultats sont exprimés en MPa.

– Résistance au choc CHARPY :

Elle est déterminée à 23°C selon les indications de la norme NF T 51 035 sur des éprouvettes de type barreau de 60 × 10 × 4 mm comportant des entailles en U, conditionnées à EH 50. Les résultats sont exprimés en $KJ/m^2$.

EXEMPLE 1 :

Dans un réacteur de polycondensation agité et chauffé, muni d'un dispositif de distillation et de balayage par un gaz inerte, on introduit les réactifs et catalyseur suivants :

1. – diacétate d'hydroquinone : 41,91 g
(rapport molaire (1)/(2) + (3) = 1)
2. – acide isophtalique : 29,88 g
(83% en mole dans le mélange (2) + (3))
3. – dicarboxy-4,4′ diphényléther : 9,29 g
(17% en mole dans le mélange (2) + (3))
4. – acide para-acétoxybenzoïque : 32,40 g
(83% en mole rapport à (1))
5. – acétate de magnésium : 0,049 g
(500 ppm)

Le réacteur est purgé à l'azote, puis chauffé par un bain métallique réglé à 260°C. L'acide acétique commence à distiller après quelques minutes, la première goutte d'acide qui distille correspondant au temps zéro. Après 14 minutes, on recueille 24 $cm^3$ d'acide acétique (68,6% de la théorie). On élève ensuite progressivement la température du bain métallique jusqu'à 330°C en 17 minutes ; dans le même temps, la pression est diminuée de 1 010.$10^2$ Pa à 13,3.$10^2$ Pa. On poursuit le chauffage à 330°C pendant 15 minutes en diminuant la pression jusqu'à 0,39.$10^2$ Pa pendant le même temps. Le volume total d'acide acétique distillé est de 35 $cm^3$ (soit 99,5% de la théorie).

Le polymère obtenu est blanc et d'aspect fibreux. Il possède une viscosité inhérante de 0,90 $dlg^{-1}$. La température d'écoulement est de 290°C. La plage d'anisotropie va de 300°C jusqu'à 360°C.

Les résultats des mesures de flexion et de choc sont indiqués dans le tableau 1 suivant.

A propos des éprouvettes moulées permettant de mesurer les propriétés mécaniques, elles sont préparées à l'aide d'une presse à vis connue dans le commerce sous la marque KAP. Pour ce faire, le copolyesteramide obtenu est broyé, puis séché 4 heures à 150°C et les granulés formé sont moulés par injection dans les conditions suivantes :

- température du fondoir : 320°C
- température du moule : 25°C
- pression matière d'injection : 22,5 MPa.

## EXEMPLE 2

Dans le même appareil que celui décrit à l'exemple 1, on introduit :

1. – diacétate d'hydroquinone : 41,91 g
(rapport molaire (1)/(2) + (3) = 1)
2. – acide isophtalique : 29,88 g
(83% en mole dans le mélange (2) + (3))
3. – dicarboxy-4,4' diphényléther : 9,29 g
(17% en mole dans le mélange (2) + (3))
4. – acide para-acétoxybenzoïque : 48,6 g
(125% en mole par rapport à (1))
5. – acétate de magnésium : 0,0648 g
(500 ppm)

On opère ensuite comme indiqué à l'exemple 1. Un volume de 38,5 $cm^3$ d'acide acétique est récupéré (96% de la théorie). Le polymère obtenu est blanc et d'aspect fibreux. Il possède une viscosité inhérente de 0,96 $dlg^{-1}$. La température d'écoulement est de 290°C. La plage d'anisotropie va de 300°C jusqu'à 360°C. Les résultats des mesures de flexion et de choc sont indiqués dans le tableau 1 suivant.

## EXEMPLE 3

Dans le même appareil que celui décrit à l'exemple 1, on introduit :

1. – diacétate d'hydroquinone : 38,8 g
(rapport molaire (1)/(2) + (3) = 1)
2. – acide isophtalique : 16,6 g
(50% en mole dans le mélange (2) + (3))
3. – dicarboxy-4,4' diphényléther : 25,8 g
(50% en mole dans le mélange (2) + (3))
4. – acide para-acétoxybenzoïque : 12,24 g
(34% en mole par rapport à (1))
5. – acétate de magnésium : 0,047 g
(500 ppm)

On opère ensuite comme indiqué à l'exemple 1. Un volume de 26 $cm^3$ d'acide acétique est récupéré (97,3% de la théorie). Le polymère obtenu est blanc et d'aspect fibreux. Il possède une viscosité inhérente de 0,825 $dlg^{-1}$. La température d'écoulement est de 290°C. La plage d'anisotropie va de 310°C jusqu'à 360°C. Les résultats des mesures de flexion et de choc sont indiqués dans le tableau 1 suivant.

## EXEMPLE 4

Dans le même appareil que celui décrit à l'exemple 1, on introduit :

1. – diacétate d'hydroquinone : 38,8 g
(rapport molaire (1)/(2) + (3) = 1)
2. – acide isophtalique : 16,6 g
(50% en mole dans le mélange (2) + (3))
3. – dicarboxy-4,4' diphényléther : 25,8 g
(50% en mole dans le mélange (2) + (3))
4. – acide para-acétamidobenzoïque : 12,17 g
(34% en mole par rapport à (1))
5. – acétate de magnésium : 0,047 g
(500 ppm)

On opère ensuite comme indiqué à l'exemple 1. Un volume de 25,5 $cm^3$ d'acide acétique est récupéré (95,5 % de la théorie). Le polymère obtenu est blanc et d'aspect fibreux. Il possède une viscosité inhérente de 1,04 $dlg^{-1}$. La température d'écoulement est de 280°C. La plage d'anisotropie va de 300°C jusqu'à 360°C. Les résultats des mesures de flexion et de choc sont indiqués dans le tableau 1 suivant.

TABLEAU 1

| EXEMPLE | FLEXION<br>Module<br>MPa | CHOC<br>CHARPY<br>$KJ/m^2$ |
|---|---|---|
| 1 | 4760 | 18,75 |
| 2 | 4870 | 10,25 |
| 3 | 4050 | 31,3 |
| 4 | 3400 | 15 |

**Revendications**

**Revendications pour les Etats Contractants : AT, BE, CH, DE, FR, GB, IT, LI, LU, NL, SE**

1. Copolyesters et copolyesteramides aromatiques thermotropes conformables ayant une masse moléculaire élevée dont la valeur minimale correspond à une viscosité inhérente égale à 0,3 $dlg^{-1}$, caractérisés par les points suivants :

– ils comprennent des unités de récurrence de formules (I), (II), (III) et (IV) :

(I) désignant la structure : 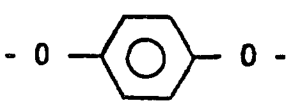 ;

(II) désignant la structure : 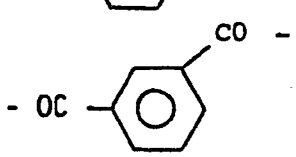 ;

(III) désignant la structure : 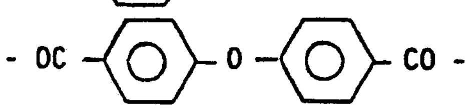 ;

(IV) désignant la structure : 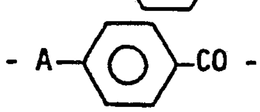 dans laquelle le symbole A représente un atome d'oxygène ou le groupement NH ;

– le rapport molaire des unités (I) par rapport à la somme des unités (II) + (III) se situe dans l'intervalle allant de 0,95 à 1,05 ;

– la quantité des unités (II) dans le mélange (II) + (III) se situe dans l'intervalle allant de 20 à 90% en mole

et celle des unités (III), par rapport à la même référence, se situe dans l'intervalle allant de 80 à 10% en mole ;

– la quantité des unités (IV), exprimée par rapport à la quantité des unités (I), se situe dans l'intervalle allant de 25 à 300 % en mole ;

– ces copolyesters et copolyesteramides possèdent une température d'écoulement se situant dans l'intervalle allant de 200 à 350°C ;

– et éventuellement ils contiennent en outre dans leur structure des unités aromatiques dioxy et/ou des unités aromatiques dicarbonyle et/ou des unités aromatiques mixtes oxy/carbonyle ou amino secondaire/carbonyle ayant une structure autre que celle des unités (I), (II), (III) et (IV), la quantité totale de ces unités supplémentaires facultatives étant au plus égale à 10% en mole par rapport à la quantité des unités (I).

2. Copolyesters et copolyesteramides selon la revendication 1, caractérisés en ce qu'ils présentent une structure dans laquelle :

– la quantité des unités (II) dans le mélange (II) + (III) se situe dans l'intervalle de 30 à 85% en mole et celle des unités (III), par rapport à la même référence, va de 70 à 15% en mole,

– et la quantite des unités (IV), exprimée par rapport à la quantité des unités (I), se situe dans l'intervalle allant de 30 à 200% en mole.

3. Copolyesters et copolyesteramides selon l'une quelconque des revendications 1 et 2, caractérisés en ce qu'ils possèdent une température d'écoulement se situant dans l'intervalle allant de 260 à 330°C.

4. Copolyesters et copolyesteramides selon la revendication 1, caractérisés en ce que les unités supplémentaires facultatives sont les unités :

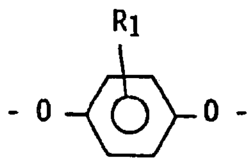

(I') où $R_1$

représente un radical méthyle ou un atome de chlore les unités (I') pouvant être identiques ou différentes entre elles,

et/ou 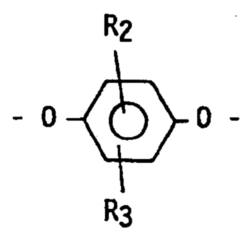

(I") où $R_2$

et $R_3$, qui peuvent être identiques ou différents, ont chacun la définition donnée ci-avant pour $R_1$, les unités (I") pouvant être identiques ou différentes entre elles,

et/ou 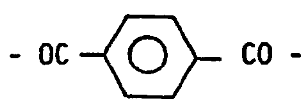

(II")

et/ou 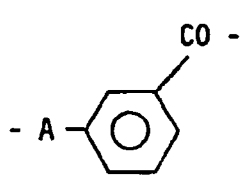

(IV')

où le symbole A a la signification donnée ci-avant à propos des unités (IV).

5. Procédé pour l'obtention des copolyesters et copolyesteramides selon l'une quelconque des revendications 1 à 4, caractérisé par le fait que l'on fait réagir :

1. – un diester d'hydroquinone non substituée en mélange éventuellement avec un (ou des) diester(s) d'un autre (ou d'autres) diphénol(s), avec

2. – de l'acide isophtalique pris seul ou en mélange éventuellement avec un autre diacide carboxylique aromatique et avec

3. – le dicarboxy-4,4′ diphényléther, et avec

4. – un dérivé acylé de l'acide parahydroxybenzoïque au niveau de la fonction phénol ou un dérivé acylé de l'acide paraaminobenzoïque au niveau de la fonction amine, pris seul ou en mélange éventuellement avec un dérivé acylé du même type d'un autre hydroxyacide aromatique ou d'un autre aminoacide aromatique,

ledit diester de diphénol étant formé à partir d'un acide alcanoïque ayant de 2 à 6 atomes de carbone et ledit dérivé acylé d'hydroxyacide ou d'aminoacide au niveau de la fonction hydroxy ou amine étant formé à partir d'un anhydride ou d'un halogénure dérivé d'un acide alcanoïque ayant de 2 à 6 atomes de carbone, les réactifs étant utilisés dans des proportions telles que :

– le rapport molaire diester(s) de diphénol(s)/diacides totaux se situe dans l'intervelle allant de 0,95 à 1,05,

– la quantité d'acide isophtalique dans le mélange acide isophtalique + dicarboxy-4,4′ diphényléther se situe dans l'intervalle de 20 à 90% en mole, et de préférence allant de 30 à 85% en mole,

– la quantité de dérivé acylé d'acide parahydroxybenzoïque ou d'acide paraaminobenzoïque au niveau de la fonction phénol ou amine se situe dans l'intervalle allant de 25 à 300% en mole par rapport à la quantité de diester d'hydroquinone non substituée, et de préférence allant de 30 à 200% en mole,

– la quantité totale des réactifs engagés autres que le diester d'hydroquinone non substituée, l'acide isophtalique, le dicarboxy-4,4′ diphényléther et le dérivé acylé de l'acide parahydroxybenzoïque ou de l'acide paraaminobenzoïque est au plus égale à 10% en mole par rapport à la quantité de diester d'hydroquinone non substituée.

6. Procédé selon la revendication 5, caractérisé en ce que l'on utilise :

– au point 1., comme autre(s) diphénol(s), une ou plusieurs hydroquinone(s) monosubstituée(s) et/ou une ou plusieurs hydroquinone(s) disubstituée(s) par les groupes méthyles et/ou chloro,

– au point 2., comme autre diacide carboxylique aromatique, l'acide téréphtalique,

– au point 4., comme autre hydroxyacide aromatique : l'acide métahydroxybenzoïque ou comme aminoacide aromatique : l'acide métaaminobenzoïque.

7. Articles conformés tels que objets moulés, fils et films issus des copolyesters et copolyesteramides selon l'une quelconque des revendications 1 à 4.

**Revendications pour l'Etat contractant suivant : ES**

1. Procédé pour l'obtention de copolyesters et copolyesteramides aromatiques thermotropes conformables ayant une masse moléculaire élevée dont la valeur minimale correspond à une viscosité inhérente égale à 0,3 $dlg^{-1}$, caractérisé en ce que l'on fait réagir :

1. – l'hydroquinone, en mélange éventuellement avec un autre (ou d'autres) diphenol(s), avec

2. – un derivé de l'acide isophtalique pris seul ou en mélange éventuellement avec un dérivé d'un autre diacide carboxylique aromatique, et avec

3. – un dérivé du dicarboxy-4,4′ diphényléther, et avec

4. – un dérivé de l'acide parahydroxybenzoïque au niveau de la fonction acide ou un dérivé de l'acide paraaminobenzoïque au niveau de la fonction acide, pris seul ou en mélange éventuellement avec un dérivé du même type d'un autre hydroxyacide aromatique ou d'un autre aminoacide aromatique,

ledit dérivé d'acide étant soit un halogénure, soit un ester d'aryle, ledit dérivé étant bien entendu un dihalogénure ou un diester dans le cas d'un diacide carboxylique,

les réactifs étant utilisés dans des proportions telles que :

– le rapport molaire diphénol(s)/dérivés de diacides se situe dans l'intervalle allant de 0,95 a 1,05,

– la quantité de dérivé d'acide isophtalique dans le mélange dérivé d'acide isophtalique + dérivé du dicarboxy -4,4′ diphényléther se situe dans l'intervalle allant de 20 à 90% en mole, et de préférence allant de 30 à 85% en mole,

– la quantité de dérivé d'acide parahydroxybenzoïque ou d'acide paraaminobenzoïque se situe dans l'intervalle allant de 25 à 300% en mole par rapport à la quantité d'hydroquinone non substituée, et de préférence allant de 30 à 200% en mole,

– la quantité totale des réactifs engagés autres que l'hydroquinone non substituée, le dérivé d'acide isophtalique, le dérivé de dicarboxy-4,4′ diphényléther et le dérivé d'acide parahydroxybenzoïque ou

paraaminobenzoïque est au plus égale à 10% en mole par rapport à la quantité d'hydroquinone non substituée.

2. Procédé selon la revendication 1, caractérisé en ce que le dérivé d'acide est soit un chlorure, soit un ester de phényle, de tolyle ou de naphtyle.

3. Procédé pour l'obtention de copolyesters et copolyesteramides aromatiques thermotropes conformables ayant une masse moléculaire élevée dont la valeur minimale correspond à une viscosité inhérente égale à 0,3 $dlg^{-1}$, caractérisé en ce que l'on fait réagir :

1. – un diester d'hydroquinone non substituée en mélange éventuellement avec un (ou des) diester(s) d'un autre (ou d'autres) diphénol(s), avec

2. – de l'acide isophtalique pris seul ou en mélange éventuellement avec un autre diacide carboxylique aromatique et avec

3. – le dicarboxy-4,4′ diphényléther, et avec

4. – un dérivé acylé de l'acide parahydroxybenzoïque au niveau de la fonction phénol ou un dérivé acylé de l'acide paraaminobenzoïque au niveau de la fonction amine, pris seul ou en mélange éventuellement avec un dérivé acylé du même type d'un autre hydroxyacide aromatique ou d'un autre aminoacide aromatique,

ledit diester de diphénol étant formé à partir d'un acide alcanoïque ayant de 2 à 6 atomes de carbone et ledit dérivé acylé d'hydroxyacide ou d'aminoacide au niveau de la fonction hydroxy ou amine étant formé à partir d'un anhydride ou d'un halogénure dérivé d'un acide alcanoïque ayant de 2 à 6 atomes de carbone, les réactifs étant utilisés dans des proportions telles que :

– le rapport molaire diester(s) de diphénol(s)/diacides totaux se situe dans l'intervalle allant de 0,95 à 1,05,

– la quantité d'acide isophtalique dans le mélange acide isophtalique + dicarboxy-4,4′ diphényléther se situe dans l'intervalle de 20 à 90% en mole, et de préférence allant de 30 à 85% en mole,

– la quantité de dérivé acylé d'acide parahydroxybenzoïque ou d'acide paraaminobenzoïque au niveau de la fonction phénol ou amine se situe dans l'intervalle allant de 25 à 300% en mole par rapport à la quantité de diester d'hydroquinone non substitutée, et de préférence allant de 30 à 200% en mole,

– la quantité totale des réactifs engagés autres que le diester d'hydroquinone non substituée, l'acide isophtalique, le dicarboxy-4,4′ diphényléther et le dérivé acylé de l'acide parahydroxybenzoïque ou de l'acide paraaminobenzoïque est au plus égale à 10% en mole par rapport à la quantité de diester d'hydroquinone non substituée.

4. Procédé selon la revendication 1 ou 3, caractérisé en ce que l'on utilise :

– au point 1., comme autre(s) diphénol(s), une ou plusieurs hydroquinone(s) monosubstituée(s) et/ou une ou plusieurs hydroquinone(s) disubstituée(s) par les groupes méthyles et/ou chloro,

– au point 2., comme autre diacide carboxylique aromatique, l'acide téréphtalique,

– au point 4., comme autre hydroxyacide aromatique : l'acide métahydroxybenzoïque ou comme autre aminoacide aromatique : l'acide métaaminobenzoïque.

5. Application des copolyesters et copolyesteramides aromatiques conformables préparés selon l'une quelconque des revendications 1 à 4 à la réalisation d'articles conformés tels qu'objets moulés, fils et films.

**Claims**

**Claims for the Contracting States : AT, BE, CH, DE, FR, GB, IT, LI, LU, NL, SE**

1. Thermotropic aromatic copolyesters and copolyesteramides, capable of being shaped, having a high molecular mass whose minimum value corresponds to an inherent viscosity of 0.3 dl $g^{-1}$, characterised by the following points :

– they comprise repeat units of formulae (I), (II), (III) and (IV) :

(I) denoting the structure :

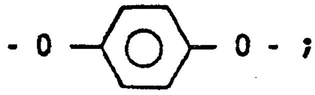

(II) denoting the structure :

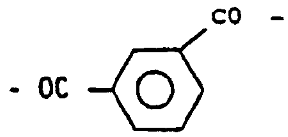

;

(III) denoting the structure :

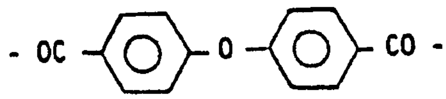

;

(IV) denoting the structure :

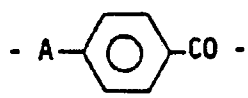

in which the symbol A denotes an oxygen atom or the NH group ;

– the molar ratio of the units (I) relative to the sum of the units (II) + (III) is situated in the range from 0.95 to 1.05 ;

– the quantity of the units (II) in the mixture of (II) + (III) is situated in the range from 20 to 90 mol% and that of the units (III), referred to the same basis, is situated in the range from 80 to 10 mol% ;

– the quantity of the units (IV), expressed relative to the quantity of the units (I), is situated in the range from 25 to 300 mol% ;

– these copolyesters and copolyesteramides have a flow temperature situated in the range from 200 to 350°C ; and optionally their structure additionally contains aromatic dioxy units and/or aromatic dicarbonyl units and/or mixed aromatic oxy/carbonyl or secondary amino/carbonyl units having a structure other than that of the units (I), (II), (III) and (IV), the total quantity of these optional additional units being not more than 10 mol% relative to the quantity of the units (I).

2. Copolyesters and copolyesteramides according to Claim 1, characterised in that they have a structure in which :

– the quantity of the units (II) in the mixture of (II) + (III) is situated in the range from 30 to 85 mol% and that of the units (III), referred to the same basis, is from 70 to 15 mol%, and

– the quantity of the units (IV), expressed relative to the quantity of the units (I), is situated in the range from 30 to 200 mol%.

3. Copolyesters and copolyesteramides according to either of Claims 1 and 2, characterised in that they have a flow temperature situated in the range from 260 to 330°C.

4. Copolyesters and copolyesteramides according to Claim 1, characterised in that the optional additional units are the units :

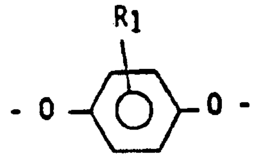

(I') where $R_1$ denotes a methyl radical or a chlorine atom, it being possible for the units (I') to be identical or different from each other,
and/or

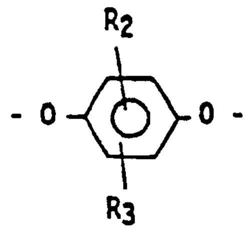

(I'') where $R_2$ and $R_3$, which may be identical or different, each have the definition given above for $R_1$, it being possible for the units (I'') to be identical or different from each other,

and/or 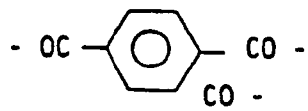 (II'')

and/or 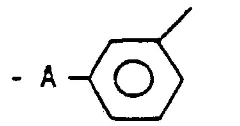 (IV') where the symbol A has the meaning given above with regard to the units (IV).

5. Process for obtaining copolyesters and copolyesteramides according to any one of Claims 1 to 4, characterised in that:

1. – a diester of unsubstituted hydroquinone optionally mixed with one or more diesters of another (or of other) diphenol(s), is reacted with

2. – isophthalic acid taken by itself or mixed optionally with another aromatic dicarboxylic acid and with

3. – 4,4'-dicarboxydiphenyl ether, and with

4. – a derivative of para-hydroxybenzoic acid acylated on the phenol group or a derivative of para-aminobenzoic acid acylated on the amine group, taken by itself or mixed optionally with an acylated derivative of the same type of another aromatic hydroxyacid or of another aromatic amino acid,

the said diphenol diester being formed from an alkanoic acid containing from 2 to 6 carbon atoms and the said hydroxyacid or amino acid derivative acylated on the hydroxyl or amine group being formed from an anhydride or from a halide derived from an alkanoic acid containing from 2 to 6 carbon atoms,

the reactants being employed in proportions such that:

– the molar ratio diester(s) of diphenol(s)/total diacids is situated in the range from 0.95 to 1.05,

– the quantity of isophthalic acid in the mixture of isophthalic acid + 4,4-dicarboxydiphenyl ether is situated in the range from 20 to 90 mol%, and preferably from 30 to 85 mol%,

– he quantity of para-hydroxybenzoic acid or of para-aminobenzoic acid derivative acylated on the phenol or amine group is situated in the range from 25 to 300 mol% relative to the quantity of diester of unsubstituted hydroquinone, and preferably from 30 to 200 mol%, and

– the total quantity of the reactants employed, other than the diester of unsubstituted hydroquinone, isophthalic acid, 4,4'-dicarboxydiphenyl ether and the acylated derivative of para-hydroxybenzoic acid or of para-aminobenzoic acid is not more than 10 mol% relative to the quantity of diester of unsubstituted hydroquinone.

6. Process according to Claim 5, characterised by employing:

– as other diphenol(s), under point 1., one or more monosubstituted hydroquinone(s) and/or one or more hydroquinone(s) disubstituted with methyl and/or chloro groups,

– as another aromatic dicarboxylic acid, under point 2., terephthalic acid,

– as another aromatic hydroxyacid, under point 4.: metahydroxybenzoic acid, or as another aromatic amino acid: meta-aminobenzoic acid.

7. Shaped articles such as moulded objects, filaments and films originating from the copolyesters and copolyesteramides according to any one of Claims 1 to 4.

**Claims for the Contracting State : ES**

1. Process for obtaining thermotropic aromatic copolyesters and copolyesteramides, capable of being

shaped, having a high molecular mass whose minimum value corresponds to an inherent viscosity of 0.3 dl $g^{-1}$, characterised in that:

1. – hydroquinone, optionally mixed with another (or other) diphenol(s), is reacted with

2. – a derivative of isophthalic acid taken by itself or mixed optionally with a derivative of another aromatic dicarboxylic acid, and with

3. – a derivative of 4,4′-dicarboxydiphenyl ether, and with

4. – a derivative of para-hydroxybenzoic acid involving the acid group or a derivative of para-aminobenzoic acid involving the acid group, taken by itself or mixed optionally with a derivative of the same type of another aromatic hydroxyacid or of another aromatic amino acid, the said acid derivative being either a halide or an aryl ester, the said derivative being, obviously, a dihalide or a diester in the case of a dicarboxylic acid, the reactants being employed in proportions such that:

- the molar ratio diphenol(s)/diacid derivatives is situated in the range from 0.95 to 1.05,
- the quantity of isophthalic acid derivative in the mixture of isophthalic acid derivative + 4,4′-dicarboxydiphenyl ether derivative is situated in the range from 20 to 90 mol%, and preferably from 30 to 85 mol%,
- the quantity of para-hydroxybenzoic acid or of para-aminobenzoic acid derivative is situated in the range from 25 to 300 mol% relative to the quantity of unsubstituted hydroquinone, and preferably from 30 to 200 mol%, and
- the total quantity of the reactants employed, other than the unsubstituted hydroquinone, the isophthalic acid derivative, the 4,4′-dicarboxydiphenyl ether derivative and the para-hydroxybenzoic or para-aminobenzoic acid derivative is not more than 10 mol% relative to the quantity of unsubstituted hydroquinone.

2. Process according to Claim 1, characterised in that the acid derivative is either a chloride or a phenyl, tolyl or naphthyl ester.

3. Process for obtaining thermotropic aromatic copolyesters and copolyesteramides, capable of being shaped and having a high molecular mass whose minimum value corresponds to an inherent viscosity of 0.3 dl $g^{-1}$, characterised in that:

1. – a diester of unsubstituted hydroquinone mixed optionally with one or more diesters of another (or of other) diphenol(s), is reacted with

2. – isophthalic acid taken by itself or mixed optionally with another aromatic dicarboxylic acid and with

3. – 4,4′-dicarboxydiphenyl ether, and with

4. – a derivative of para-hydroxybenzolic acid acylated on the phenol group or a derivative of para-aminobenzoic acid acylated on the amine group, taken by itself or mixed optionally with an acylated derivative of the same type of another aromatic hydroxyacid or of another aromatic amino acid,

the said diphenol diester being formed from an alkanoic acid containing from 2 to 6 carbon atoms and the said hydroxyacid or amino acid derivative acylated on the hydroxyl or amine group being formed from an anhydride or a halide derived from an alkanoic acid containing from 2 to 6 carbon atoms,

the reactants being employed in proportions such that:

- the molar ratio diester(s) of diphenol(s)/total diacids is situated in the range from 0.95 to 1.05,
- the quantity of isophthalic acid in the mixture of isophthalic acid + 4,4′-dicarboxydiphenyl ether is situated in the range from 20 to 90 mol%, and preferably from 30 to 85 mol%,
- the quantity of para-hydroxybenzoic acid or of para-aminobenzoic acid derivative acylated on the phenol or amine group is situated in the range from 25 to 300 mol% relative to the quantity of diester of unsubstituted hydroquinone, and preferably from 30 to 200 mol%, and
- the total quantity of the reactants employed, other than the diester of unsubstituted hydroquinone, isophthalic acid, 4,4′-dicarboxydiphenyl ether and the acylated derivative of para-hydroxybenzoic acid or of para-aminobenzoic acid is not more than 10 mol% relative to the quantity of diester of unsubstituted hydroquinone.

4. Process according to Claim 1 or 3, characterised by employing:

- as other diphenol(s), under point 1., one or more monosubstituted hydroquinone(s) and/or one or more hydroquinone(s) disubstituted with methyl and/or chloro groups,
- as another aromatic dicarboxylic acid, under point 2., terephthalic acid, and
- as another aromatic hydroxyacid, under point 4.: metahydroxybenzoic acid, or as another aromatic amino acid: meta-aminobenzoic acid.

5. Application of the aromatic copolyesters and copolyesteramides, capable of being shaped, prepared according to any one of Claims 1 to 4, to the production of shaped articles such as moulded objects, filaments and films.

## Ansprüche

### Patentansprüche für die Vertragsstaaten : AT, BE, CH, DE, FR, GB, IT, LI, LU, NL, SE

1. Formbare thermotrope aromatische Copolyester und Copolyesteramide mit einer hohen Molekularmasse, deren minimaler Wert einer inneren Viskosität gleich 0,3 $dlg^{-1}$ entspricht, gekennzeichnet durch die folgenden Punkte :

– sie umfassen wiederkehrende Einheiten der Formeln (I), (II), (III) und (IV) :

(I) bezeichnet die Struktur

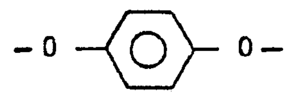

(II) bezeichnet die Struktur

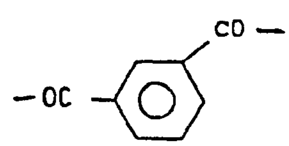

(III) bezeichnet die Struktur

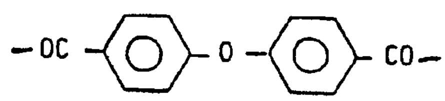

(IV) bezeichnet die Struktur

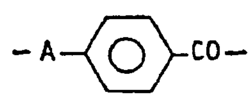

worin das Symbol A ein Sauerstoffatom oder die NH-Gruppe darstellt ;

– das Molverhältnis der Einheiten (I) in bezug auf die Summe der Einheiten (II) + (III) liegt in dem Bereich von 0,95 bis 1,05 ;

– die Menge der Einheiten (II) in dem Gemisch (II) + (III) liegt in dem Bereich von 20 bis 90 Mol-% und diejenige der Einheiten (III) in bezug auf die gleiche Referenz in dem Bereich von 80 bis 10 Mol-% liegt ;

– die Menge der Einheiten (IV) ausgedrückt in bezug auf die Menge der Einheiten (I) liegt in dem Bereich von 25 bis 300 Mol-% ;

– diese Copolyester und Copolyesteramide besitzen eine Fließtemperatur in dem Bereich von 200 bis 350°C ; und sie enthalten gegebenenfalls außerdem in ihrer Struktur aromatische Dioxyeinheiten und/oder aromatische Dicarbonyleinheiten und/oder aromatische gemischte Oxy/Carbonyleinheiten oder sek.-Amino/Carbonyleinheiten mit einer Struktur anders als diejenige der Einheiten (I), (II), (III) und (IV), wobei die Gesamtmenge dieser gegebenenfalls zusätzlichen Einheiten höchstens gleich 10 Mol-% in bezug auf die Menge der Einheiten (I) ist.

2. Copolyester und Copolyesteramide gemäß Anspruch 1, dadurch gekennzeichnet, daß sie eine Struktur aufweisen, worin :

– die Menge der Einheiten (II) in dem Gemisch (II) + (III) in dem Bereich von 30 bis 85 Mol-% und diejenige der Einheiten (III) in bezug auf die gleiche Referenz von 70 bis 15 Mol-% liegt,

– und die Menge die Einheiten (IV) ausgedrückt in bezug auf die Menge der Einheiten (I) in dem Bereich von 30 bis 200 Mol-% liegt.

3. Copolyester und Copolyesteramide gemäß einem der Ansprüche 1 und 2, dadurch gekennzeichnet, daß sie eine Fließtemperatur in dem Bereich von 260 bis 330°C besitzen.

4. Copolyester und Copolyesteramide gemäß Anspruch 1, dadurch gekennzeichnet, daß die gegebenenfalls vorhandenen zusätzlichen Einheiten die Einheiten sind :

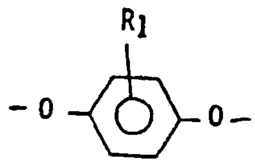

(I')

worin $R_1$ ein Methylrest oder ein Chloratom darstellt, wobei die Einheiten (I') identisch oder untereinander verschieden sein können,
und/oder

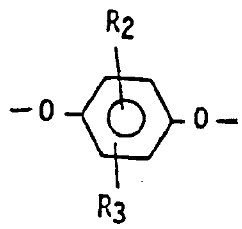

(I")

worin $R_2$ und $R_3$, die identisch oder verschieden sind, jeweils die vorstehend für $R_1$ angegebene Definition haben, wobei die Einheiten (I") identisch oder untereinander verschieden sein können,
und/oder

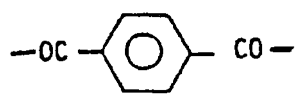

(II")

und/oder

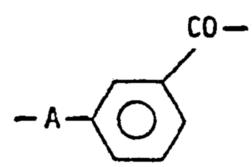

(IV')

worin das Symbol A die vorstehend für die Einheiten (IV) angegebene Bedeutung hat.

5. Verfahren zur Herstellung der Copolyester und Copolyesteramide gemäß einem der Ansprüche 1 bis 4, dadurch gekennzeichnet, daß man zur Reaktion bringt :

1. einen nicht-substituierten Hydrochinondiester, gegebenenfalls im Gemisch mit (einem) Diester(n) eines anderen (oder anderer) Diphenols/Diphenole mit
2. Isophthalsäure allein genommen oder gegebenenfalls im Gemisch mit einer anderen aromatischen Dicarbonsäure und mit
3. 4,4'-Dicarboxydiphenylether und mit
4. einem acylierten Derivat der p-Hydroxybenzoesäure in Höhe der Phenolfunktion oder einem acylierten Derivat der p-Aminobenzoesäure in Höhe der Aminfunktion, allein genommen oder gegebenenfalls im Gemisch mit einem acylierten Derivat vom gleichen Typ einer anderen aromatischen Hydroxysäure oder einer anderen aromatischen Aminosäure, wobei der Diphenoldiester gebildet ist aus einer Alkansäure mit 2 bis 6 Kohlenstoffatomen und das genannte Acylderivat der Hydroxysäure oder Aminosäure in Höhe der Hydroxy- oder Aminfunktion aus einem Anhydrid oder einem Halogenid, stammend von einer Alkansäure mit 2 bis 6 Kohlenstoffatomen, gebildet ist,

wobei die verwendeten Reaktionsteilnehmer in Mengenverhältnissen eingesetzt werden, daß

– das Molverhältnis Diester des Diphenols(der Diphenole)/ gesamte Disäuren in dem Bereich von 0,95 bis 1,05 liegt,

– die Menge Isophthalsäure in dem Gemisch Isophthalsäure + 4,4′-Dicarboxydiphenylether in dem Bereich von 20 bis 90 Mol-% und vorzugsweise von 30 bis 85 Mol-% liegt,

– die Menge des acylierten Derivats der p-Hydroxybenzoesäure oder p-Aminobenzoesäure in Höhe der Phenol- oder Aminfunktion in dem Bereich von 25 bis 300 Mol-% in bezug auf die Menge nicht-substituierter Hydrochinondiester und vorzugsweise 30 bis 200 Mol-% ist,

– die Gesamtmenge der eingesetzten Reaktionsteilnehmer anders als der nicht-substituierte Hydrochinondiester, Isophthalsäure, 4,4′-Dicarboxydiphenylether, und acyliertes Derivat der p-Hydroxybenzoesäure oder p-Aminobenzoesäure höchstens gleich 10 Mol-% in bezug auf die Menge an nichtsubstituiertem Hydrochinondiester beträgt.

6. Verfahren gemäß Anspruch 5, dadurch gekennzeichnet, daß man verwendet:

– gemäß Punkt 1. als andere(n) Diphenol/e einen oder mehrere durch Methyl- und/oder Chlorgruppen monosubstituierte(s) Hydrochinon(e) und/oder ein oder mehrere disubstituierte(s) Hydrochinon(e),

– gemäß Punkt 2. als andere aromatische Dicarbonsäure die Terephthalsäure,

– gemäß Punkt 4. als andere aromatische Hydroxysäure : die Metahydroxybenzoesäure, oder als aromatische Aminosäure : die Metaaminobenzoesäure.

7. Geformte Erzeugnisse wie geformte Gegenstände, Fäden oder Filme aus den Copolyestern und Copolyesteramiden gemäß einem der Ansprüche 1 bis 4.

**Patentansprüche für den Vertragsstaat : ES**

1. Verfahren zur Herstellung von formbaren thermotropen aromatischen Copolyestern und Copolyesteramiden mit einer hohen Molekularmasse, deren Minimalwert einer inneren Viskosität gleich 0,3 $dlg^{-1}$ entspricht, dadurch gekennzeichnet, daß man zur Reaktion bringt:

1. Hydrochinon gegebenenfalls im Gemisch mit einem anderen (oder anderen)Diphenol(en) mit

2. einem Derivat der Isophthalsäure allein genommen oder gegebenenfalls im Gemisch mit einem Derivat einer anderen aromatischen Dicarbonsäure und mit

3. einem Derivat des 4,4′-Dicarboxydiphenylethers und mit

4. einem Derivat der Parahydroxybenzoesäure in Höhe der Säurefunktion oder einem Derivat der Paraaminobenzoesäure in Höhe der Säurefunktion allein genommen oder gegebenenfalls im Gemisch mit einem Derivat des gleichen Typs einer anderen aromatischen Hydroxysäure oder einer anderen aromatischen Aminosäure,

wobei das Säurederivat entweder ein Halogenid oder ein Arylester ist, das genannte Derivat ein Dihalogenid oder ein Diester im Falle einer Dicarbonsäure ist,

die Reaktionsteilnehmer in solchen Mengenverhältnissen verwendet werden, daß:

– das Molverhältnis Diphenol(e)/Derivate der Disäuren im Bereich von 0,95 bis 1,05 liegt,

– die Menge an Derivat der Isophthalsäure in dem Gemisch Isophthalsäurederivat + Derivat des 4,4′-Dicarboxydiphenylethers, in dem Bereich von 20 bis 90 Mol-% und vorzugsweise von 30 bis 85 Mol-% liegt,

– die Menge an Derivat der Parahydroxybenzoesäure oder Paraaminobenzoesäure in dem Bereich von 25 bis 300 Mol-% in bezug auf die Menge an nicht-substituiertem Hydrochinon und vorzugsweise von 30 bis 200 Mol-% liegt,

– die Gesamtmenge der eingesetzten Reaktionsteilnehmer anders als das nicht-substituierte Hydrochinon, das Isophthalsäurederivat, das 4,4′-Dicarboxydiphenyletherderivat und das Parahydroxybenzoesäure- oder Paraaminobenzoesäurederivat, höchstens gleich 10 Mol-% in bezug auf die menge an nicht-substituiertem Hydrochinon beträgt.

2. Verfahren gemäß Anspruch 1, dadurch gekennzeichnet, daß das Säurederivat ein Chlorid oder ein Phenyl-, Tolyl- oder Naphthylester ist.

3. Verfahren zur Erzielung von formbaren thermotropen aromatischen Copolyestern und Copolyesteramiden mit einer erhöhten molekularmasse, deren minimaler Wert einer inneren Viskosität gleich 0,3 $dlg^{-1}$ entspricht, dadurch gekennzeichnet, daß man zur Reaktion bringt:

1. einen nicht-substituierten Hydrochinondiester, gegebenenfalls im Gemisch mit einem Diester(n) eines anderen (oder anderer) Diphenols(Diphenole)mit

2. Isophthalsäure allein genommen oder gegebenenfalls im Gemisch mit einer anderen aromatischen Dicarbonsäure und mit

3. 4,4″-Dicarboxydiphenylether und mit

4. einem acylierten Derivat der Parahydroxybenzoesäure in Höhe der Phenolfunktion oder einem acylierten

Derivat der Paraaminobenzoesäure in Höhe der Aminfunktion allein genommen oder gegebenenfalls im Gemisch mit einem acylierten Derivat des gleichen Typs einer anderen aromatischen Hydroxysäure oder einer anderen aromatischen Aminosäure,
wobei der Diester des Diphenols aus einer Alkansäure mit 2 bis 6 Kohlenstoffatomen gebildet ist und das Acylderivat der Hydroxysäure oder der Aminosäure in Höhe der Hydroxy- oder Aminfunktion aus einem Anhydrid oder einem Halogenid von einer Alkansäure mit 2 bis 6 Kohlenstoffatomen gebildet ist,
wobei die Reaktionsteilnehmer in Mengenverhältnissen verwendet werden, daß :

- das Molverhältnis des Diesters (der Diester) des Diphenols (Diphenole)/gesamte Disäuren in dem Bereich von 0,95 bis 1,05 liegt,
- die Menge an Isophthalsäure in dem Gemisch Isophthalsäure + 4,4′-Dicarboxydiphenylether in dem Bereich von 20 bis 90 Mol-% und vorzugsweise von 30 bis 85 Mol-% liegt,
- die Menge an acyliertem Derivat der Parahydroxybenzoesäure oder Paraaminobenzoesäure in Höhe der Phenol- oder Aminfunktion in dem Bereich von 25 bis 300 Mol-% in bezug auf die Menge an nicht-substituiertem Hydrochinondiester und vorzugsweise von 30 bis 200 Mol-% liegt,
- die Gesamtmenge der eingesetzten Reaktionsteilnehmer anders als der nicht-substituierte Hydrochinondiester, die Isophthalsäure, der 4,4′-Dicarboxydiphenylether und das Acylderivat der Parahydroxybenzoesäure oder Paraaminobenzoesäure höchstens gleich 10 Mol-% in bezug auf die Menge an nicht-substituiertem Hydrochinondiester beträgt.

4. Verfahren gemäß Anspruch 1 oder 3, dadurch gekennzeichnet, daß man verwendet :

- gemäß Punkt 1. als andere(s) Diphenol(e) ein oder mehrere durch die Methyl- und/oder Chlorgruppen monosubstituierte(s) Hydrochinon(e) und/oder ein oder mehrere disubstituierte(s) Hydrochinon(e),
- gemäß Punkt 2. als andere aromatische Dicarbonsäure die Terephthalsäure,
- gemäß Punkt 4. als andere aromatische Hydroxysäure : die Metahydroxybenzoesäure und als andere aromatische Aminosäure : die Metaaminobenzoesäure.

5. Verwendung der verformbaren aromatischen Copolyester und Copolyesteramide, hergestellt gemäß einem der Ansprüche 1 bis 4 zur Herstellung von geformten Erzeugnissen wie geformte Gegenstände, Fäden und Filme.